(19) Europäisches Patentamt
European Patent Office
Office européen des brevets

(11) **EP 4 455 940 A1**

(12) **EUROPEAN PATENT APPLICATION**

(43) Date of publication:
**30.10.2024 Bulletin 2024/44**

(21) Application number: **23170508.8**

(22) Date of filing: **27.04.2023**

(51) International Patent Classification (IPC):
***G06N 3/0455*** (2023.01)  ***G06N 3/088*** (2023.01)
***G06N 3/0895*** (2023.01)  ***G06N 3/09*** (2023.01)

(52) Cooperative Patent Classification (CPC):
**G06N 3/0455; G06N 3/0895; G06N 3/09;**
**G06N 3/0985**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **TOYOTA JIDOSHA KABUSHIKI**
**KAISHA**
**Toyota-shi, Aichi-ken, 471 8571 (JP)**

(72) Inventors:
 • **ALJUNDI, Rahaf**
 **1140 BRUSSELS (BE)**

 • **SEIFI, Soroush**
 **1140 BRUSSELS (BE)**
 • **OLMEDA REINO, Daniel**
 **1140 BRUSSELS (BE)**

(74) Representative: **Cabinet Beau de Loménie**
 **158, rue de l'Université**
 **75340 Paris Cedex 07 (FR)**

Remarks:
Amended claims in accordance with Rule 137(2)
EPC.

(54) **METHOD AND COMPUTING SYSTEM FOR TRAINING A NEURAL NETWORK SYSTEM**

(57)    A computer-implemented method for training a neural network system, comprising: obtaining a first out-of-distribution, OOD, embedding of an OOD input sample that is out of each class in a training distribution comprising one or more classes; determining a value of a first loss function based on similarity or a distance between the first OOD embedding and one of both a prototype of a class in the training distribution and an in-distribution ("ID") embedding of an ID input sample belonging to the one or more classes, wherein the value of the first loss function positively depends on the similarity or negatively depends on the distance; and modifying a parameter of the system to reduce the value of the first loss function

**FIG.1**

**Description**

BACKGROUND OF THE INVENTION

1. Field of the Invention

The invention relates generally to the technical field of machine learning, and in particular, to a computer-implemented method and a computer system for training a neural network system, a neural network system, a computer program product and a computer-readable storage medium.

2. Description of Related Art

Most existing machine learning models are trained and evaluated in a closed-set setting, where both the training and test sets are assumed to be drawn from the same distribution (i.e., in-distribution data). Therefore, when encountered with examples coming from any other distribution (i.e., out-of-distribution data), these models tend to give predictions that are highly confident but not reliable. Practical applications, especially safety-critical ones, require the model to detect out-of-distribution samples, potentially to avoid making predictions on such inputs and possibly asking for human intervention instead. For autonomous driving applications, this might include object classes, road signs or traffic conditions that the model has not seen during training.

The cross-entropy loss is a popular choice to train classification models under the closed-set assumption. Popular datasets used in the closed-set setting have mutually exclusive classification labels that can be one-hot encoded. A perfect fit for cross-entropy. However, when a model is trained to always select an object class with a confidence close to 1 for any input, it will likely produce highly confident prediction for out-of-distribution data as well. For instance, a model trained to classify cats and dogs with the cross-entropy loss would classify any other object as one of these two classes, typically with a high confidence. Besides, cross-entropy is shown to be sensitive to noise and susceptible to overfitting.

SUMMARY OF THE INVENTION

A first embodiment of the present disclosure is directed to a computer-implemented method for training a neural network system. The method includes: obtaining a first out-of-distribution (hereinafter "OOD") embedding of an OOD input sample that is out of each class in a training distribution including one or more classes; determining a value of a first loss function based on similarity or a distance between the first OOD embedding and one of both a prototype of a class in the training distribution and an in-distribution (hereinafter "ID") embedding of an ID input sample belonging to one of the one or more classes; and modifying a parameter of the system to reduce the value of the first loss function. The value of the first loss function positively depends on the similarity or negatively depends on the distance.

As is known in the art and as used herein, an embedding refers to the output of a neural network of the neural network system that is before a prediction head. The neural network is configured to map its input space to another high dimensional representation.

As used herein and unless otherwise stated, the terms "each" and "every" are intended to mean the only one thing or every one of all things. For example, "each class in a training distribution" means "the only class or each of all classes in a training distribution".

Further, as can be appreciated, the term "positively depend" refers to the situation where the value of the first loss function depends on the similarity, such that an increase in the similarity leads to an increase in the value of the first loss function, whereas the term "negatively depend" refers to the situation where the value of the first loss function depends on the distance, such that an increase in the distance leads to a decrease in the value of the first loss function.

As such, the method is able to push the first OOD embedding away from a class in the training distribution and thus achieves the technical effects of improving the neural network system's ability to distinguish between ID data and OOD data and enhancing the neural network system's robustness with respect to OOD data.

As is known in the art and as used herein, a training distribution refers to a distribution of training input samples of the neural network system across one or more classes (which are referred to as "training classes" hereinafter). The neural network system learns to estimate the distribution during the training process. The training distribution may take the form of a probability mass function, a probability density function, or any other form compatible with the present application. An example training distribution is the distribution of handwritten digits. Relatedly, an ID input sample is an input sample that belongs to one of the one or more classes, and an OOD input sample is an input sample that is out of the one or more classes.

In particular, the method according to the first embodiment may be intended to train the neural network system to predict on the one or more classes. For example, the method is intended to train the system to make a prediction on each ID input sample and to reject each OOD input sample or hand them over to a human operator.

Further, as is known in the art, a class may have one or more prototypes, which represents the class or training input samples of the class in a feature space. Herein examples of a prototype of a class include a class centroid, a cluster center, and a parameter of the system. An ID input sample may be assigned to the class of the nearest prototype.

In an implementation that is compatible with any other implementation herein, the first loss function includes a first contrast term that measures similarity or one or more distances between each first OOD embedding of each OOD input sample in a training batch and each prototype of each class in the training distribution.

Accordingly, the method is able to push all first OOD embeddings away from all training classes, further increasing the OOD robustness of the system.

In still another implementation that is compatible with any other implementation herein, the prototype is a parameter of a prediction neural network of the system that is configured to process ID embeddings of ID input samples to make a prediction on the ID input samples based on the prototype. For example, the prototype may be used by the prediction neural network to classify the ID input samples into the class represented by the prototype.

Since the prototype is the same one that is used to make a prediction on the ID input samples, this implementation makes the training even more simple and efficient.

In still another implementation that is compatible with any other implementation herein, the method further includes a step of obtaining a second OOD embedding of the OOD input sample. The second OOD embedding is different from the first OOD embedding. The value of the first loss function is determined further based on similarity or a distance between the second OOD embedding and the other one of both the prototype and the ID embedding. The value of the first loss function may positively depend on the similarity or negatively depend on the distance.

As such, the neural network system's ability to distinguish between ID data and OOD data may be further improved.

In still another implementation that is compatible with the implementation above, the method further includes a step of obtaining the ID embedding by projecting, using a projection neural network, another embedding of the ID input sample to a vector space. The value of the first loss function is determined based on the similarity or distance between the second OOD embedding and the ID embedding. And obtaining the second OOD embedding includes projecting, using the projection neural network, the first OOD embedding to the vector space.

As is known in the art, the projection neural network or projection head neural network can learn to select a subspace of features that are most relevant for distinguishing between positive and negative pairs of samples. This can be seen as finding a subspace of the vector space spanned by the backbone features that contains the most informative features for contrastive learning. As such, the implementation further improves the neural network system's ability to distinguish between ID data and OOD data.

In still another implementation that is compatible with any other implementation herein, the first OOD embedding is obtained in a generating process, which in turn includes a step of mixing up ID embeddings of at least two ID input samples belonging to different classes in the training distribution. Accordingly, pseudo-OOD embeddings can be efficiently generated when OOD data cannot be provided.

In still another implementation that is compatible with the implementation above, the mixing up step may include performing an affine transformation on the ID embeddings, and/or, a parameter of the mixing up process is drawn at each iteration from a normal distribution, thereby further increasing the efficiency.

In still another implementation that is compatible with the two implementations above, the at least two ID embeddings may include a first ID embedding of an input sample belonging to a first class and a second ID embedding of another input sample belonging to a second class. Among ID embeddings of all ID input samples belonging to the first class in a training batch, the first ID embedding is most similar to the second ID embedding. The selection of the closest ID embedding of a different class is to ensure that the generated OOD embedding indeed lies between two close clusters of ID embeddings and to avoid generating OOD embeddings that are interleaved with existing ID embedding clusters.

In still another implementation that is compatible with any other implementation herein, the first loss function further includes a contrastive loss function, which in turn includes a metric measuring similarity or a distance between ID embeddings of ID input samples belonging to one of the one or more classes, and/or another metric measuring similarity or a distance between ID embeddings of ID input samples belonging to different classes in the training distribution.

Accordingly, the method can move together embeddings of ID input samples of the same class while forcing embeddings of ID input samples of different classes to become further from each other, thereby maintaining or improving the prediction accuracy on ID data.

In still another implementation that is compatible with any other implementation herein, the value of the first loss function is determined further based on similarity or a distance between the ID embedding representation and a prototype representing the class to which the ID input samples belongs. The value of the first loss function may positively depend on the distance or negatively depend on the similarity.

In particular, the prototype may be the prototype representing the ID embedding representation. That is, the prototype is the one that should be assigned to the ID embedding representation if the system functions correctly.

As such, the implementation enhances the system's prediction accuracy on ID input data.

In still another implementation that is compatible with any other implementation herein, the method further includes, prior to obtaining the first OOD embedding of the OOD input sample: pre-training the neural network system using a second loss function configured to move together ID embeddings of ID input samples belonging to a same class in the training distribution in an embedding space. An example of the second loss function is the contrastive loss function described in the implementation above. This allows the system to first learn good initial representation of the task at hand.

In still another implementation that is compatible with any other implementation herein, the first loss function includes a second contrast term measuring similarity or distances between projected OOD embeddings and projected ID embeddings, and a lower weight is assigned to the second contrast term if the OOD embeddings are generated by mixing up ID embeddings of at least two ID input samples belonging to different training classes than if the OOD embeddings are generated by an encoder neural network processing OOD input samples. This can enhance the system's robustness with respect to OOD data.

A second embodiment of the present disclosure is directed to a computing system for training a neural network system. The computing system includes one or more processors and one or more computer-readable media storing instructions which, when executed by the one or more processors, cause the one or more processors to perform the method according to any example implementation of the first embodiment as described above.

A third embodiment of the present disclosure is directed to a neural network system trained by using the method according to any example implementation of the first embodiment as described above.

A fourth embodiment of the present disclosure is directed to a computer program product, including instructions which, when executed by the one or more processors, cause the one or more processors to perform the method according to any example implementation of the first embodiment as described above.

A fifth embodiment of the present disclosure is directed to a computer-readable storage medium storing the computer program product according to the fourth embodiment or the neural network system according to the third embodiment.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

**FIG. 1** is a flow chart illustrating schematically a method implemented by a computing system for training a neural network system according to a first embodiment of the disclosure;

**FIG. 2** is a further flow chart of the method of **Fig. 1,** illustrating schematically various ways for generating embeddings according to different examples of the first embodiment;

**FIG. 3** is a further flow chart of the method of **Fig. 1**, illustrating schematically different training stages according to an example of the first embodiment; and

**FIG. 4** is a block diagram representing schematically a computing system according to a second embodiment of the disclosure.

DETAILED DESCRIPTION OF EMBODIMENTS

It is to be understood that the figures and descriptions of the present disclosure have been simplified to illustrate elements that are relevant for a clear understanding of the present disclosure, while eliminating, for the purpose of clarity, many other elements found in typical neural network systems and in typical methods and computing devices for training neural network systems.

The flowcharts and/or block diagrams in the figures illustrate the configuration, steps and functionality of possible implementations of devices, methods and computer program products according to various embodiments of the present invention. In this regard, each block in the flowcharts or block diagrams may represent a module, segment, or portion of code, which includes one or more executable instructions for implementing the specified logical function(s).

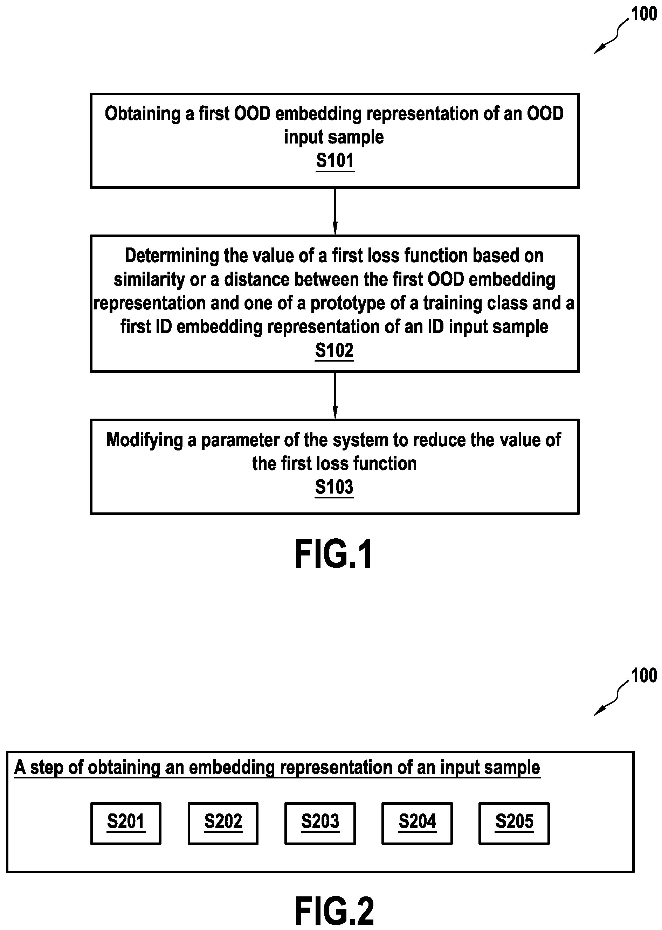

Fig. 1 illustrates a method 100 for training a neural network system according to a first embodiment of the disclosure. The method 100 is implemented by a computing system and includes the following steps S101-S103.

The neural network system may include one or more neural networks each including one or more hidden layers. The neural network system may be a visual recognition system, a natural language processing system, or any other type of neural network system that is compatible with the present disclosure. Accordingly, an input sample of the system may be an image, text in natural language form, an audio, an input from time series or sound sensors, or any other type of input samples that the system can be trained to handle.

At the step S101, a first OOD embedding of an OOD input sample is obtained.

At the step S102, the value of a first loss function is determined based on similarity or a distance between the first OOD embedding and one of a prototype of a training class and a first ID embedding of an ID input sample. The value of the first loss function positively depends on the similarity or negatively depends on the distance.

As described in the summary section, an ID input sample belongs to a training class of a training distribution and an OOD input sample does not belong to any training class of the training distribution.

At the step S103, a parameter of the system is modified to reduce the value of the first loss function.

As is known in the art, the parameters of the neural network system are values that are learned during training and are stored in the weights and biases of the neurons in the system. Training algorithms that may be used to adapt the parameters to reduce the first loss function include iterative approaches such as gradient descent, or any other algorithm that is compatible with the present disclosure. An example of the optimization algorithm is the stochastic gradient descent (hereinafter "SGD").

As such, the method 100 is able to push the first OOD embedding away from a training class, thereby improving the neural network system's ability to distinguish between ID data and OOD data and enhancing the neural network system's robustness with respect to OOD data.

In an implementation that is compatible with any other implementation herein, the first loss function includes a first metric measuring the similarity or distance as described above. The first metric may include an inner product of the two vectors (i.e. the first OOD embedding and the prototype/ first ID embedding), an Euclidean distance between the vertices of the two vectors originating from the point in the Euclidean space, cosine similarity of the two vectors, or any other metric configured to measure the similarity or distance between the two vectors.

In still another implementation that is compatible with any other implementation herein, the first loss function includes a first contrast term $\mathcal{L}_E^O$ measuring similarity or one or more distances between first OOD embeddings of each OOD input sample in a training batch and each prototype of each training class. Or, the first loss function includes a second contrast term $\mathcal{L}_H^O$ measuring similarity or one or more distances between first OOD embeddings of each OOD input sample in a training batch and first ID embeddings of each ID input sample in the training batch. The terms "first OOD embeddings" and "first ID embeddings" each refer to embeddings that are in the same feature space.

In an example where the first loss function includes the first contrast term, the system includes a prediction neural network that is configured to process each ID embedding to make a prediction on the corresponding ID input sample based on prototypes including the prototype mentioned above at step S102, and each of the prototypes is a parameter of the prediction neural network. In other words, the prototype(s) that are used in the first loss function to enhance the system's robustness with respect to OOD input data are also used to classify ID input samples.

In particular, each prototype may be a vector of weights of an affine transformation at the same layer of a linear prediction neural network that has no bias term (e.g., the weights of the last linear classification layer of a classifier).

The prediction may include a classification prediction, a detection prediction, a recognition prediction, a regression prediction, a segmentation prediction, or a similarity search prediction.

In an example where the first loss function includes the second contrast term, each first OOD embedding and each first ID embedding are respectively generated by projecting, using a projection neural network, an OOD embedding and an ID embedding in the encoder feature space to another vector space (e.g., to a lower-dimensional space).

The first contrast term $\mathcal{L}_E^O$ or the second contrast term $\mathcal{L}_H^O$ may include the first metric as described above. For example, the first contrast term may include a log of a sum of exponentials of first metrics measuring similarity between each first OOD embedding and each prototype. The minimization of the Log Sum Exponential (hereinafter "LSE") function would lead to the desired minimization of the maximal similarity of the first OOD embedding to the closest class prototype.

An example of the first contrast term $\mathcal{L}_E^O$ is as follows:

$$\mathcal{L}_E^O = \frac{1}{N^O} \sum_{i=1}^{N^O} \frac{1}{K} \log \sum_{k=1}^{K} \exp((\mathbf{f}_i^{O\mathrm{T}} \theta_k / \tau), \quad (1)$$

where $N^O$ denotes the number of OOD input samples in a training batch, $\mathbf{f}_i^O$ denotes the first embedding of the $i^{th}$ OOD input sample in the training batch, $\theta_k$ denotes the prototype of the $k^{th}$ class in the training distribution, K denotes the number of classes in the training distribution, and $\tau$ is a temperature, a hyper-parameter to soften/smooth the training distribution, which effectively distinguishes ID vs OOD. In addition, the symbol "$\mathbf{A}^{\mathrm{T}}$" in the equations herein represents the transpose of a vector/matrix $\mathbf{A}$.

As such, instead of using all ID features $\mathbf{f}_i^I$, only their class prototypes $\theta_k$ are deployed, making the training simple and efficient.

Similarly, an example of the second contrast term $\mathcal{L}_H^O$ is as follows:

$$\mathcal{L}_H^O = \frac{1}{N^O} \sum_{i=1}^{N^O} \log \sum_{j=1}^{N^I} \exp\left(\left(\mathbf{z}_i^{O\mathrm{T}} \mathbf{z}_j^I\right)/\tau\right), \quad (2)$$

where $N^O$ denotes the number of OOD input samples in a training batch, $\mathbf{z}_i^O$ denotes the first embedding of the $i^{\text{th}}$ OOD input sample in the training batch, $\mathbf{z}_j^I$ denotes the first ID embedding of the $j^{\text{th}}$ ID input sample in the training batch, $N^I$ denotes the number of ID input samples in the training batch, and $\tau$ is a temperature.

As such, the second contrast term pushes OOD representations away from ID representations without imposing any constraints on similarities among auxiliary data, making the training simple and efficient.

In still another implementation that is compatible with any other implementation herein, in the step S102 the value of the first loss function is determined further based on similarity or a distance between a second OOD embedding of the OOD input sample and the other one of both the prototype and the first ID embedding.

The second OOD embedding may be the same or different from the first OOD embedding. For example, they may lie in different feature space: one of the first OOD embedding and the second OOD embedding may be obtained by projecting, using a projection neural network, the other one to a vector space.

As illustrated by **Fig. 2,** in still another implementation that is compatible with any other implementation herein, the method 100 includes one or more of the following ways S201-S205 of obtaining an embedding of an input sample **x.** The embedding may be the first or second OOD embedding, the first ID embedding, or any other embedding described herein.

S201: an embedding **f** is generated by an encoder neural network E processing the input sample **x** and acting as a feature extractor, $E(\mathbf{x}) = \mathbf{f}$. The encoder neural network $E$ may be part of the neural network system and may be any kind of encoder neural network. As an example, the encoder neural network $E$, which is the backbone or base architecture of the neural network system, may be a residual network (hereinafter "ResNet") such as ResNet-18.

S202: an embedding **z** is generated by projecting, using a projection neural network $H$, an encoder feature **f** to a projection feature space. That is, the projection neural network $H$ maps the encoder feature **f** to a corresponding projection feature **z**, where $H(\mathbf{f}) = \mathbf{z}$. The projection neural network $H$ may be part of the neural network system during the training, and may be removed from the neural network system at inference time. Examples of the projection neural network include a multi-layer perceptron with a single hidden layer or just a single linear layer, which is known in the art.

As used herein, the term "encoder feature" refers to any embedding that is in the same feature space as the outputs of the encoder neural network $E$ (i.e., the encoder feature space), and the term "projection feature" refers to any embedding that is in the same feature space as the outputs of the projection neural network $H$ (i.e., the projection feature space).

S203: an ID embedding is obtained by applying augmentation(s) such as standard crop, horizontal flip, and colour-jitter augmentations to an ID input sample and then generating the ID embedding based on the augmented ID input sample using the process S201 or S202 above.

Please note that the augmented ID input sample will be counted in the total number of ID input samples in a training batch if the total number is needed for determining the value of any loss function described herein (e.g., in the equation (2)).

S204: an OOD embedding is generated by mixing up ID embeddings of at least two ID input samples belonging to different classes in the training distribution.

The inventors have observed that in many real-life applications such as autonomous driving, there is a high chance of encountering OOD inputs the embeddings of which lie in between class categories in the embedding space. For instance, a model which has not seen any example belonging to the class "Motorcyclist", may assign an embedding that lies in between the pedestrian and vehicle clusters to such an example. Based on the observation, the process S204 is proposed.

As can be appreciated, the OOD input sample of the OOD embedding generated using the process S204 does not need to be physically present in a training batch and will still be counted in the total number of OOD input samples in the training batch if the total number is needed for determining the value of the first loss function (e.g., in the equation (1) or (2)).

The ID embeddings may be in the same feature space to improve the OOD robustness of the learned model. Further, the ID embeddings may be encoder features coming from raw and/or augmented ID input samples to make the generation of the OOD embedding simple and efficient.

In particular, the mixing up step includes performing an affine transformation on the at least two ID embeddings, where a parameter of the affine transformation is drawn at each iteration from a normal distribution.

Alternatively or additionally, the at least two ID embeddings comprise a second ID embedding of an input sample belonging to a first class and a third ID embedding of another input sample belonging to a second class, and among in-distribution embeddings of all in-distribution input samples belonging to the first class in a training batch, the second in-distribution embedding is most similar to the third in-distribution embedding.

For instance, given an ID feature $\mathbf{f}_i^I$, a pseudo-OOD feature may be generated as follows:

$$\mathbf{f}_i^O = \lambda \mathbf{f}_i^I + (1 - \lambda)\mathbf{f}_j^I, \; j = \arg \max_{j, y_j \neq y_i}(\mathbf{f}_i^{I\mathrm{T}} \mathbf{f}_j^I), \quad (3)$$

where the pseudo-OOD feature $\mathbf{f}_i^O$ is a linear combination of the concerned ID feature $\mathbf{f}_i^I$ and the most similar ID $\mathbf{f}_j^I$ of a different class. The parameter λ is drawn at each iteration from a normal distribution centered at 0.5 with 0.3 standard deviation.

As can be appreciated, the proposed pseudo-OOD features generation technique is extremely efficient and incurs minimal extra computational cost.

S205: an embedding is generated by normalizing another embedding (such as one that is generated by using any of the processes S201-S204 above) to a unit length. In particular, any embedding and any prototype used for determining the value of the first loss function may be normalized before the determination to improve the performance of the system.

In still another implementation that is compatible with any other implementation herein, the first loss function includes a contrastive loss function that encourages ID embeddings of ID input samples belonging to the same training class to be closer while pushing ID embeddings of ID input samples belonging to different training classes apart.

The contrastive loss function may include a supervised or self-supervised contrastive loss function. An example of a supervised contrastive loss function $\mathcal{L}_H^{\mathrm{SupCon}}$ may be as follows:

$$\mathcal{L}_H^{\mathrm{SupCon}} = \frac{1}{N^I} \sum_{i=1}^{N^I} \mathcal{L}_{H,i}^{\mathrm{SupCon}}, \quad (4)$$

where $N^I$ denotes the number of original and augmented ID input samples in the training batch, and

$$\mathcal{L}_{H,i}^{\mathrm{SupCon}}(\mathbf{z}_i^I, P_i) =$$

$$\frac{1}{|P_i|} \sum_{\mathbf{z}_p^I \in P_i}(-(\mathbf{z}_i^{I\mathrm{T}} \mathbf{z}_p^I)/\tau + \log \sum_{j \neq i} \exp(((\mathbf{z}_i^{I\mathrm{T}} \mathbf{z}_j^I)/\tau)), \quad (5)$$

where $\mathbf{z}_i^I$ denotes a projected embedding of the ith ID input sample in the training batch, $\mathbf{z}_j^I$ denotes the projected embedding of the jth ID input sample in the training batch, $P_i$ denotes the set of projected embeddings of all other ID input samples in the training batch that belongs to the same class as the ith ID input sample, and $\mathbf{z}_p^I$ is an element of the set.

For more information about the equation (5), please refer to the following paper:
Prannay Khosla, Piotr Teterwak, Chen Wang, Aaron Sama, Yonglong Tian, Phillip Isola, Aaron Maschinot, Ce Liu, and Dilip Krishnan. Supervised contrastive learning. Advances in Neural Information Processing Systems, 33:18661-18673, 2020.

In still another implementation that is compatible with any other implementation herein, in the step S102, the value of the first loss function is determined further based on the similarity or a distance between the ID embedding representation and a prototype representing the class to which the ID input sample belongs. In particular, the prototype may be the one which represents the ID embedding representation.

As an example, the first loss function includes a tightness term $\mathcal{L}_E^P$ that serves to learn class prototypes by maximizing their similarities with corresponding class features. In particular, a nearest prototype classifier (i.e., assigning an input sample to the class of the nearest prototype in the feature space) may be used. While training on ID data with this tightness term, on one hand features of the same class are forced to become closer (and each class prototype is learned as the closest to its class features), but on the other hand features are forced to become further from the other class features.

As such, this implementation allows the system to better distinguish between ID input samples of different classes and also enhances the robustness with respect to OOD data. As can be appreciated, the value of the first loss function may positively depend on the distance or negatively depend on the similarity.

The tightness term may be used for training both the prediction neural network (to learn the prototype) and the encoder neural network (to enhance the OOD robustness).

In an example where the class prototypes and the corresponding class features are in the encoder feature space, the tightness term $\mathcal{L}_E^P$ may be as follows:

$$\mathcal{L}_E^P = \frac{1}{N^I} \sum_{i=1}^{N^I} \mathcal{L}^{\text{tt}}\left(\mathbf{f}_i^I, \boldsymbol{\theta}_{y_i}\right) = \frac{1}{N^I} \sum_{i=1}^{N^I} -\mathbf{f}_i^{I^T} \boldsymbol{\theta}_{y_i}, \quad (6)$$

where $\mathbf{f}_i^I$ denotes the encoder feature of an ith ID input sample in a training batch, $\theta_{yi}$ denotes a class prototype that is to be assigned to the encoder feature, and $N^I$ denotes the number of ID input samples in the training batch.

As described in various implementations above, the first loss function may include one or more loss terms or loss functions. Different weights may be assigned to the loss terms or loss functions to control their contribution. An example of the first loss function $\mathcal{L}$ is as follows:

$$\mathcal{L} = \mathcal{L}_H^{\text{SupCon}} + \gamma \mathcal{L}_H^O + \alpha(\mathcal{L}_E^P + \mathcal{L}_E^O), \quad (7)$$

where the parameters $\alpha$ and $\gamma$ are the weights of different loss terms.

As such, the minimization of the first loss function optimizes jointly the representations and the class prototypes while increasing the OOD robustness by contrasting OOD features from both ID features and their class prototypes.

The value of the weight of a loss term or loss function in the first loss function may vary when training with real OOD and with fake OOD. In a non-limiting example, the first loss function $\mathcal{L}$ includes the second contrast term $\mathcal{L}_H^O$. Pseudo-OOD features generated using the process S204 are projected, normalized and then added to the training set for training the projection head and/or the encoder neural network using the second contrast term $\mathcal{L}_H^O$. The value of the weight $\gamma$ of the second contrast term $\mathcal{L}_H^O$ may be smaller (e.g., $\gamma = 0.5$) for training with the pseudo-OOD features than for training with real OOD features (e.g., $\gamma = 1$). Meanwhile the weight $\alpha$ of the classification loss $\mathcal{L}_E^P + \mathcal{L}_E^O$ may be set to 0.1.

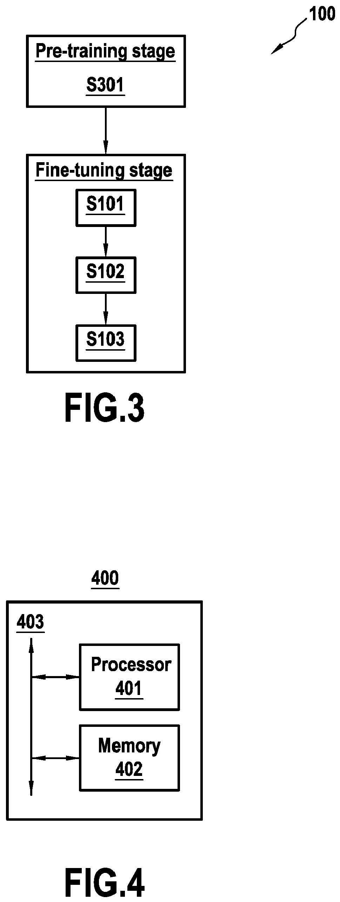

As illustrated by **Fig. 3,** in still another implementation that is compatible with any other implementation herein, the system is first trained in a step S301 using a second loss function configured to move together ID embeddings of ID input samples belonging to a same class in the training distribution in an embedding space. The second loss function may include the contrastive loss function and/or the tightness term $\mathcal{L}_E^P$ as described above. Then the system is fine-tuned with the first loss function for additional epochs (e.g., 50 epochs). This allows to first learn good initial representation of the task at hand and then to fine-tune these representations to permit a strong separation of ID and OOD data. This also gives the possibility to fine-tune any pre-trained model when OOD data becomes available.

In a specific example, the neural network system may be trained with a batch size of 512 for 500 epochs using SGD as the optimizer and a cosine annealing scheduler.

Experiments performed on a wide range of OOD datasets have shown that the system training with the method 100 according to the first embodiment can significantly reduce false positive rate. The proposed method does not reply on large auxiliary OOD datasets and can be trained using a small amount of real/fake OOD data. This method 100 moves a step closer to deploying OOD detector in practice by providing more reliable OOD rejection.

**Fig. 4** illustrates a computing system 400 according to a second embodiment of the disclosure. The computing system 400 includes one or more processors 401 and one or more computer-readable storage media 402 storing instructions which, when executed by the one or more processors 401, cause the one or more processors to perform the method 100 according to any example implementation of the first embodiment as described herein.

In addition, the neural network system may be stored in the computing system 400 or in a computing device outside the computing system 400.

Examples of the processor 401 include a central processing unit (hereinafter "CPU"), a vision processing unit (hereinafter "VPU"), a graphics processing unit (hereinafter "GPU"), a tensor processing unit (hereinafter "TPU"), a neural processing unit (hereinafter "NPU"), a neural processing engine, a core of a CPU, VPU, GPU, TPU, NPU or another processing device, an application processor, a display controller, an application specific integrated circuit (hereinafter "ASIC"), a field programmable gate array (hereinafter "FPGA"), a coprocessor, or any other hardware configured to function as a processing unit. The one or more processing components 1011 may be embedded within another hardware component such as an image sensor and the like.

Examples of the computer-readable storage medium 401 include a random access memory (hereinafter "RAM"), a dynamic random access memory (hereinafter "DRAM"), a static random access memory (hereinafter "SRAM"), any other form of volatile memory known in the art, a magnetic hard disk, an optical disk, a floppy disk, a flash memory, an electrically programmable memory (hereinafter "EPROM"), an electrically erasable and programmable memory (hereinafter "EEPROM"), any other form of non-volatile memory known in the art, a data server, etc.

The computing system 400 may further include one or more input components configured to receive input, such as a touch-sensitive screen, a mouse, a keyboard, a voice response system, a camera, a microphone, or any other device for detecting input from a human or machine.

And/or, the computing system 400 may further include one or more output components configured to generate output, such as a video graphics adapter card, a cathode ray tube (hereinafter "CRT") monitor, a liquid crystal display (hereinafter "LCD"), or any other device for generating output to a human or machine.

And/or, the computing system 400 may further include one or more communication components configured to communicate with external devices via wired or wireless network(s) by transmitting or receiving network signals over network(s). Examples of a communication component include a network interface card such as an Ethernet card, an optical transceiver, a radio frequency transceiver, a universal serial bus controller, or any other device that can send or receive information.

Different components of the computing system 400 may be directly or indirectly coupled to each other physically, communicatively, or operationally via a communication channel 403. The communication channel may include one or more buses (such as an address bus, data bus or combination thereof), a network connection, an inter-process communication data structure, or any other means for communicating data.

A third embodiment of the present disclosure is directed to a neural network system trained by using the method according to any example implementation of the first embodiment as described herein.

A fourth embodiment of the present disclosure is directed to a computer program product, including instructions which, when executed by the one or more processors, cause the one or more processors to perform the method according to any example implementation of the first embodiment as described herein.

A fifth embodiment of the present disclosure is directed to a computer-readable storage medium storing the computer program product according to the fourth embodiment or the neural network system according to the third embodiment.

This invention having been described in particular embodiments, it is clear that it is susceptible to numerous modifications and embodiments within the scope of the invention as defined by the following claims.

**Claims**

1. A computer-implemented method (100) for training a neural network system, **characterized by** comprising:

obtaining (S101) a first out-of-distribution, OOD, embedding of an OOD input sample that is out of each class in a training distribution comprising one or more classes;

determining (S102) a value of a first loss function based on similarity or a distance between the first OOD embedding and one of both a prototype of a class in the training distribution and an in-distribution, ID, embedding of an ID input sample belonging to one of the one or more classes, wherein the value of the first loss function positively depends on the similarity or negatively depends on the distance; and

modifying (S103) a parameter of the system to reduce the value of the first loss function.

2. The method according to claim 1, wherein the first loss function comprises a first contrast term measuring similarity or one or more distances between each first OOD embedding of each OOD input sample in a training batch and each prototype of each class in the training distribution.

3. The method according to claim 1 or 2, wherein the prototype is a parameter of a prediction neural network of the system that is configured to process ID embeddings of ID input samples to make a prediction on the ID input samples based on the prototype.

4. The method according to any one of the claims 1 to 3, further comprising:
   obtaining a second OOD embedding of the OOD input sample that is different from the first OOD embedding, wherein the value of the first loss function is determined (S102) further based on similarity or a distance between the second OOD embedding and another one of both the prototype and the ID embedding.

5. The method according to claim 4, further comprising:
   obtaining the ID embedding by projecting, using a projection neural network, another embedding of the ID input sample to a vector space, wherein the value of the first loss function is determined (S102) based on the similarity or distance between the second OOD embedding and the ID embedding, and obtaining the second OOD embedding comprises:
   projecting, using the projection neural network, the first OOD embedding to the vector space.

6. The method according to any one of the claims 1 to 5, wherein obtaining (S101) the first OOD embedding comprises:
   generating (S204) the first OOD embedding by mixing up ID embeddings of at least two ID input samples belonging to different classes in the training distribution.

7. The method according to claim 6, wherein the at least two ID embeddings comprise a first ID embedding of an input sample belonging to a first class and a second ID embedding of another input sample belonging to a second class, and among ID embeddings of all ID input samples belonging to the first class in a training batch, the first ID embedding is most similar to the second ID embedding.

8. The method according to claim 6 or 7, wherein mixing up the ID embeddings comprises performing an affine transformation on the ID embeddings, and/or, a parameter for the mixing up process is drawn at each iteration from a normal distribution.

9. The method according to any one of the claims 1 to 8, wherein the first loss function comprises a contrastive loss function comprising

   - a metric measuring similarity or a distance between ID embeddings of ID input samples belonging to one of the one or more classes, and/or
   - another metric measuring similarity or a distance between ID embeddings of ID input samples belonging to different classes in the training distribution; and/or

   wherein the value of the first loss function is determined (S102) further based on similarity or a distance between the ID embedding representation and a prototype representing the class to which the ID input sample belongs.

10. The method according to any one of the claims 1 to 9, further comprising, prior to obtaining (S101) the first OOD embedding of the OOD input sample:
    pre-training (S301) the neural network system using a second loss function configured to move together ID embeddings of ID input samples belonging to a same class in the training distribution in an embedding space.

11. The method according to any one of the claims 1 to 10, wherein the first loss function comprises a contrast term measuring similarity or distances between projected OOD embeddings and projected ID embeddings, and a lower weight is assigned to the second contrast term if the OOD embeddings are generated (S204) by mixing up ID embeddings of at least two ID input samples belonging to different training classes than if the OOD embeddings are generated (S201) by an encoder neural network processing OOD input samples.

12. A computing system (400) for training a neural network system, the computer system (400) comprising:

> one or more processors (401); and
> one or more computer-readable media (402) storing instructions which, when executed by the one or more processors (401), cause the one or more processors to perform the method according to any one of the claims 1 to 11.

13. A neural network system trained by using the method according to any one of the claims 1 to 11.

14. A computer program product, comprising instructions which, when executed by one or more processors, cause the one or more processors to perform the method according to any one of the claims 1 to 11.

15. A computer-readable storage medium (400) storing the computer program product according to claim 14 or the neural network system according to claim 13.

**Amended claims in accordance with Rule 137(2) EPC.**

1. A computer-implemented method (100) for training a neural network system, **characterized by** comprising:

> obtaining (S101) a first out-of-distribution, OOD, embedding of an OOD input sample that is out of each class in a training distribution comprising one or more classes;
> determining (S102) a value of a first loss function based on similarity or a distance between the first OOD embedding and one of both a prototype of a class in the training distribution and an in-distribution, ID, embedding of an ID input sample belonging to one of the one or more classes, wherein the value of the first loss function positively depends on the similarity or negatively depends on the distance; and
> using an optimization algorithm to adapt (S103) a parameter of the system to reduce the value of the first loss function.

2. The method according to claim 1 , wherein the first loss function comprises a first contrast term measuring similarity or one or more distances between each first OOD embedding of each OOD input sample in a training batch and each prototype of each class in the training distribution.

3. The method according to claim 1 or 2, wherein the prototype is a parameter of a prediction neural network of the system that is configured to process ID embeddings of ID input samples to make a prediction on the ID input samples based on the prototype.

4. The method according to any one of the claims 1 to 3, further comprising:
obtaining a second OOD embedding of the OOD input sample that is different from the first OOD embedding, wherein the value of the first loss function is determined (S102) further based on similarity or a distance between the second OOD embedding and another one of both the prototype and the ID embedding.

5. The method according to claim 4, further comprising:
obtaining the ID embedding by projecting, using a projection neural network, another embedding of the ID input sample to a vector space, wherein the value of the first loss function is determined (S102) based on the similarity or distance between the second OOD embedding and the ID embedding, and obtaining the second OOD embedding comprises:
projecting, using the projection neural network, the first OOD embedding to the vector space.

6. The method according to any one of the claims 1 to 5, wherein obtaining (S101) the first OOD embedding comprises:
generating (S204) the first OOD embedding by mixing up ID embeddings of at least two ID input samples belonging to different classes in the training distribution.

7. The method according to claim 6, wherein the at least two ID embeddings comprise a first ID embedding of an input sample belonging to a first class and a second ID embedding of another input sample belonging to a second class, and among ID embeddings of all ID input samples belonging to the first class in a training batch, the first ID embedding is most similar to the second ID embedding.

8. The method according to claim 6 or 7, wherein mixing up the ID embeddings comprises performing an affine transformation on the ID embeddings, and/or, a parameter for the mixing up process is drawn at each iteration from a normal distribution.

9. The method according to any one of the claims 1 to 8, wherein the first loss function comprises a contrastive loss function comprising

- a metric measuring similarity or a distance between ID embeddings of ID input samples belonging to one of the one or more classes, and/or
- another metric measuring similarity or a distance between ID embeddings of ID input samples belonging to different classes in the training distribution; and/or
wherein the value of the first loss function is determined (S102) further based on similarity or a distance between the ID embedding representation and a prototype representing the class to which the ID input sample belongs.

10. The method according to any one of the claims 1 to 9, further comprising, prior to obtaining (S101) the first OOD embedding of the OOD input sample:

pre-training (S301) the neural network system using a second loss function configured to move together ID embeddings of ID input samples belonging to a same class in the training distribution in an embedding space.

11. The method according to any one of the claims 1 to 10, wherein the first loss function comprises a contrast term measuring similarity or distances between projected OOD embeddings and projected ID embeddings, and a lower weight is assigned to the second contrast term if the OOD embeddings are generated (S204) by mixing up ID embeddings of at least two ID input samples belonging to different training classes than if the OOD embeddings are generated (S201) by an encoder neural network processing OOD input samples.

12. A computing system (400) for training a neural network system, the computer system (400) comprising:

one or more processors (401); and
one or more computer-readable media (402) storing instructions which, when executed by the one or more processors (401), cause the one or more processors to perform the method according to any one of the claims 1 to 11.

13. A neural network system trained by using the method according to any one of the claims 1 to 11.

14. A computer program product, comprising instructions which, when executed by one or more processors, cause the one or more processors to perform the method according to any one of the claims 1 to 11.

15. A computer-readable storage medium (400) storing the computer program product according to claim 14 or the neural network system according to claim 13.

100

Obtaining a first OOD embedding representation of an OOD
input sample
S101

Determining the value of a first loss function based on
similarity or a distance between the first OOD embedding
representation and one of a prototype of a training class and a
first ID embedding representation of an ID input sample
S102

Modifying a parameter of the system to reduce the value of
the first loss function
S103

# FIG.1

100

A step of obtaining an embedding representation of an input sample

| S201 | S202 | S203 | S204 | S205 |

# FIG.2

100

Pre-training stage

S301

↓

Fine-tuning stage

S101

↓

S102

↓

S103

# FIG.3

400

403

Processor
401

Memory
402

# FIG.4

Europäisches
Patentamt

European
Patent Office

Office européen
des brevets

## EUROPEAN SEARCH REPORT

Application Number

EP 23 17 0508

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YIFEI MING ET AL: "How to Exploit Hyperspherical Embeddings for Out-of-Distribution Detection?", ARXIV.ORG, CORNELL UNIVERSITY LIBRARY, 201 OLIN LIBRARY CORNELL UNIVERSITY ITHACA, NY 14853, 15 April 2023 (2023-04-15), XP091485205, * figures 1-5 * * table 1 * * equations 5-7 * * sections 1-4 and Appendix * ----- | 1-15 | INV. G06N3/0455 G06N3/088 G06N3/0895 G06N3/09 |
| | | | TECHNICAL FIELDS SEARCHED (IPC) |
| | | | G06N |

The present search report has been drawn up for all claims

| Place of search | Date of completion of the search | Examiner |
|---|---|---|
| The Hague | 20 September 2023 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PRANNAY KHOSLA ; PIOTR TETERWAK ; CHEN WANG ; AARON SAMA ; YONGLONG TIAN ; PHILLIP ISOLA ; AARON MASCHINOT ; CE LIU ; DILIP KRISHNAN.** Supervised contrastive learning. *Advances in Neural Information Processing Systems,* 2020, vol. 33, 18661-18673